# EUROPEAN PATENT SPECIFICATION

(11) **EP 0 525 605 B1**
(45) Date of publication and mention of the grant of the patent: **13.05.1998**
(21) Application number: 92112486.3
(22) Date of filing: 21.07.1992
(51) Int. Cl.: B62K 19/20, B62K 19/22, F16B 7/04

(54) **Improvement in tube joining methods**
Verbesserung an Verfahren zum Verbinden von Rohrabschnitten
Perfectionnement des procédés de raccordement des tubes

(30) Priority: 30.07.1991 IT PN910050
(43) Date of publication of application: 03.02.1993
(73) Proprietor: C.M.B. TELAI S.r.l., I-36061 Bassano del Grappa (Vicenza) (IT)
(72) Inventor: Zancai, Lucio, I-33084 Cordenons, Pordenone (IT); Kos, Edo, I-33080 Fiume Veneto, Pordenone (IT)
(74) Representative: Giugni, Valter

(56) References cited:
- DE-A- 2 929 969
- FR-A- 945 496
- FR-A- 2 556 056
- FR-A- 2 600 031
- US-A- 4 900 049

## Description

The present invention relates to an improvement in the assembly used to join tubings, such as the ones employed in particular to manufacture frames for racing bicycles.

It is a well-known fact that such bicycle frames are made up by a plurality of load-bearing tubings that are connected to each other through corresponding joints, on which the dynamic stresses are actually exerted and which sustain the full weight of the cyclist.

According to current techniques, such joints are formed by welding a so-called "stump", consisting of a short length of metal tubing, on a first tube, normally made of suitable metal, such a stump having the purpose of acting as the supporting member to which is applied, tipically using some adhesive-bonding technique, the tube of carbon-fibre or similar lightweight, high-strength material, which combines with other component parts to form the frame.

The attachment of said stump to said first tube is usually performed by means of welding on to the bead formed by the intersection of the afore cited frame members, whereas it should be noticed that the first tube has no aperture on its side in correspondence of the joining area.

This method of joining bicyle frame tubings is widely known in its various forms and variants, as extensively described in US 4,900,049, in DE 29 29 969 and in FR 2 556 056 (publication),

Such a joining assembly, while meeting operating and functional requirements, is not fully satisfactory in practice, since the joints resulting therefrom have a quite serious drawback. As a matter of fact, the main problem encountered in manufacturing such a bicycle frame actually depends on the technique that is implemented to attach the tube to the stump, ie. the almost universally used bonding technique by means of an adhesive, typically a structural epoxy one, which cures when it is applied between the outer cylindrical surface of said stumps and a corresponding portion of inner cylindrical surface of said tubes that are preferably made of carbon-fibre material.

As a matter of fact, owing to the static and, above all, dynamic loads and stresses that are exerted on the frame, the latter is not subject to a single, constant load, but, more than that, to a whole series of constantly changing flexural, torsional and shearing loads being applied to its various sections.

As a matter of fact, according to a well-kown principle, bicycle frames should be as rigid as possible, so that they will be able to transmit the whole of the generated force to the ground, without any such loss of energy or load as may be caused by the elasticity of the frame.

All the afore cited loads act on the joint in such a way as to cause the carbon-fibre tubings to undergo even very heavy cyclical torsional stresses with respect to the corresponding attachment stumps. After a certain number of such stressing cycles, this ultimately leads to a breakdown in the adhesive layer applied between the stump and the related tubing, so that the joint will eventually get unstuck and the tube will slip away, whereas the entire frame becomes unserviceable and has to be dropped, thereby entailing quite remarkable economic costs.

In order to overcome said drawback it is known, from the publication FR 2 600 031 (basis for 2-part form of claims), the adding of a connecting element, (manchon 4) made of composite termosetting material, which is inserted inside both of the tubing to be connected. Such kind of solution is able to solve the problem of the compatibility of the thermal dilatation of the different materials the two tubings are composed of; however such a solution does not relieve the problem to improve the rigidity of the bicycle frame.

It would therefore be quite desirable, and it is actually the purpose of the present invention, to provide a joint for joining bycicle frame tubings, which is capable of radically avoiding the above cited drawback, is simple and quick to be performed and, furthermore, is adequately reliable and cost-effective.

This and further aims are reached according to the present invention in the utilization of a joint, which has the particular features as recited in the appended claims.

For a better understanding, however, the invention will be further described in the following, by way of non-limiting example, with reference to the accompanying drawings in which:
- Figure 1 is an exploded view of the type of joint used to couple two frame tubings according to the invention;
- Figure 2 is a cross-section view into a complete joint carried out in accordance with Figure 1;

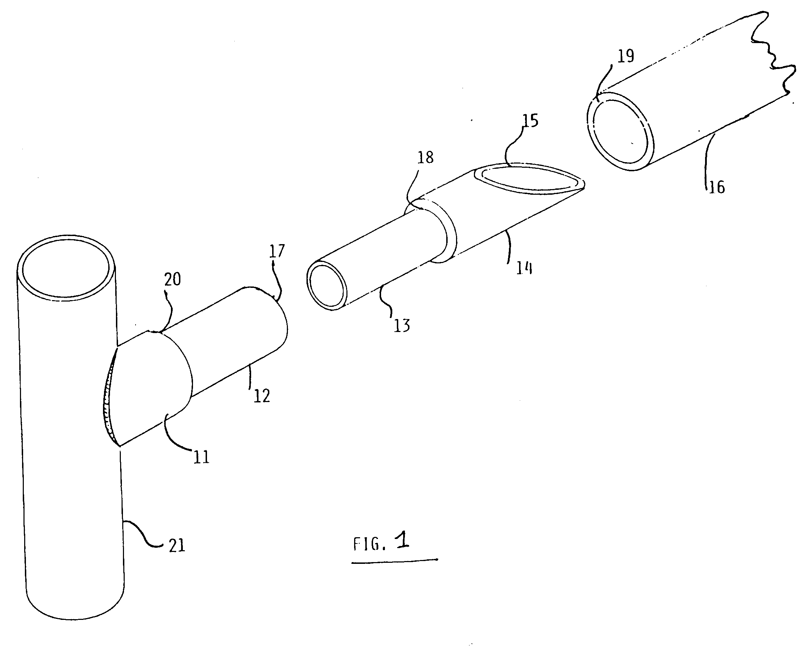

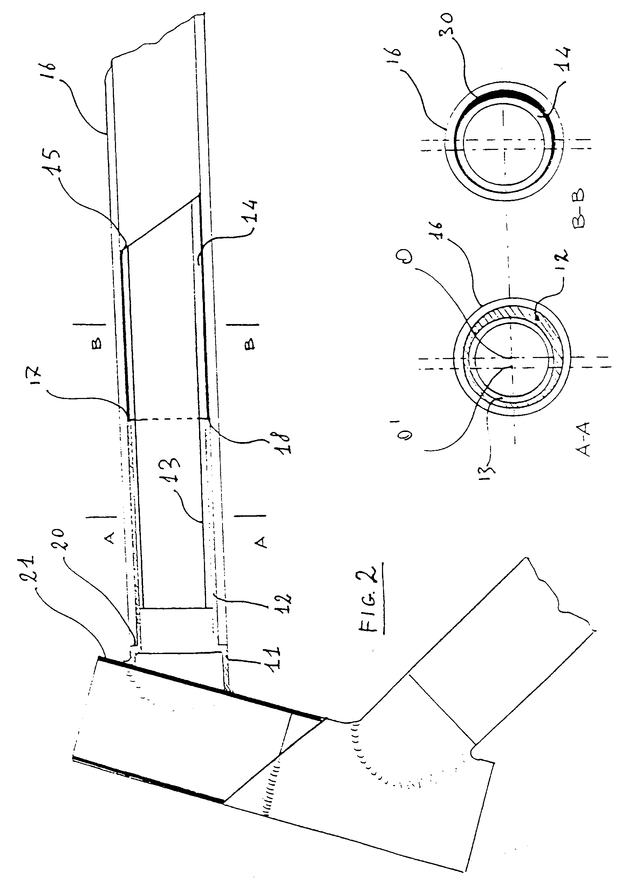

The embodiment, which may prove advantageous over the afore described type of joint and is capable of overcoming all of the above cited drawbacks, is shown in the Figures 1 and 2.

Referring to these Figures, it can be seen that the assembly according to the invention consists in welding to said apertureless, ie. solid-surface, middle tubing 21 a metal stump of a traditional type consisting by a laterally arranged, rather short length of tube that is given an orientation according to the desired axis. Said tube 11 then continues along the same axis with an extension 12 having a smaller diameter. In a way that will be more extensively detailed in the following, a connection element of carbon-fibre or similar material (13, 14) is prepared separately, said connection element consisting in a first portion of cylindrical tubing 13, which extends into a second portion 14 having an increased diameter and terminated by an edge 15 that is remarkably oblique with respect to the axis of said portion 14.

Finally, the load-bearing tubing 16 is fitted, which is also made of carbon-fibre or, anyway, of the same material used for said connection element 13, 14, whereas said tubing 16 is one of the tubes forming the frame.

The outer dimensions of the above cited elements are selected so that:
- the tube portion 13 precisely fits into the tube 12, while the tube portion 14 precisely abuts with its edge 18 against the edge 17 of the tube 12;
- the outside diameter is the same for both the metal tube 12 and the non-metal tube 14;
- the inside diameter of the tubing 16 is equal to the outside diameter of the tube portion 14, so that said tubing 16 can be precisely fitted through insertion around said tube portion 14;
- the wall thickness 19 of said tubing 16 is equal to the circular rim 20 resulting from the reduction in diameter from the afore cited tube 11 to the afore cited tube 12.

In conclusion, by first inserting the connection element 13, 14, as appropriately treated with adhesive on its outer surfaces, into the tube 12 until its edge 18 abuts against the edge 17, and then coupling the tubing 16 on to the tube portion 14 so that its edge 19 abuts against the circular rim 20, a series of connections is reached, the cross-sectional view of which is shown in Figure 2.-

By referring now to that Figure, the sections A-A and B-B should in particular be noticed.

Looking at said sections in Figure 2.- it can in fact be noticed that some of the afore cited tubes are not coaxial with respect to each other, having been rather made so as to enable them to be fitted according to a partly off-center alignment for reasons that will be explained accordingly in the following. In particular, this out-of-alignment feature concerns the outer surface of the tube 12, which is eccentric with respect to its inner surface, along two distinct axes 0 and 0', respectively.

It can be noticed that, in the section A-A, the centre 0 is the centre of the cylinder separating the inner surface of the tubing 16 and the outer surface of the tube 12, whereas the centre 0' is the centre of the cylinder separating the outer surface of the tube portion 13 and the inner surface of the tube 12.

It can further be noticed that, in the section B-B, the space resulting to the misalignment of the inner surface of the tubing 16 with respect to the outer surface of the element 14 is occupied by a layer of adhesive 30.

In addition to the elimination of the drawbacks cited in connection with the formerly described embodiment, a double torsion-antagonizing effect is reached through this type of construction:
- the effectiveness of the adhesion between the tube portion 14 and the interior of the tubing 16 is in fact remarkably enhanced, owing to the materials being both similar in their nature and particularly well-suited to be treated with high-strength structural adhesives of the cited type;
- a rotation between the tube portion 14 and the tubing 16 is furthermore prevented by the oblique section 15 which rests against the residual amount of adhesive forming upon the introduction of the tube portion 14 in the tubing 16; it has in fact been demonstrated that such a bead of adhesive, owing to its oblique arrangement, strongly opposes any rotation and, therefore, any slippage of the tube portion 14 with respect to the tubing 16 from being triggered, thereby strongly contributing to an improvement of the mechanical strength of the joint;
- furthermore, and above all, the afore described off-center alignment creates the effect so that, as anyone skilled in the art would acknowledge, a rotation and/or slippage of said elements with respect to each other is strongly opposed, since some of the same elements are subject to compressive stress and their inherent resistance to that compressive action automatically creates a further opposition to their mutual torsional slippage.

Il will be appreciated that the above joining assembly has only been described and illustrated here with reference to the accompanying drawings by way of non-limiting example, and that it may therefore be the subject of any modification considered to be appropriate, without departing from the scopes of the invention.

## Claims

1. Tube joint assembly, in particular for manufacturing bycicles frames, comprising:
- a stump (11) welded on a first tubing (21),
- a second tubing (16), preferably made of carbon-fiber or similar material, ending with a respective circular rim (19) and fitted on said stump (11) upon appropriate treatment of the related contact surfaces with adhesive means,
- a further connection element (13, 14) provided to match internally with both said stump (11) and said second tubing (16),
**characterized in that:**
- said stump (11) shows to its outer end a smaller-diameter tube portion (12) wich blends to said stump through a circular rim (20),
- said smaller diameter tube portion (12) ends externally with a further rim (17),
- said further connection element consists of a first cylindrical tube portion (13) and a second cylindrical tube portion (14), linked by an annular rim (18) and respectively facing said stump (11) and said second tubing (16),
- the external diameter of said first cylindrical tube portion (13) fits exactly with the internal diameter of the smaller diameter tube portion (12) of said stump (11),
- the external diameter of said second cylindrical tube portion (14) is identical with both the internal diameter of said second tubing (16), and the external dimeter of said smaller diameter tube portion (12) of said stump (11),
- said annular rim (18), linking said first cylindrical tube portion (13) with said second cylindrical tube portion (14), matches exactly with said further rim (17) of said smaller diameter tube portion (12), and the circular rim (19) of said second tubing (16) mathes exactly with said circular rim (20) between the external diameter of said stump (11) and the respective smaller-diameter tube portion (12) and mechanical interference means to prevent said second tubing from slipping around said stump are provided, wherein the axis (0), common to the internal cylindrical surface of said smaller diameter tube portion (12) and to the first cylindrical tube portion (13), is out of alignement from the axis (0') of the external surface of said smaller diameter tube portion (12).

2. Tube joint assembly according to claim 1, **characterized in that** the plane containing the rim (15), limiting said second cylindrical tube portion (14) towards said second tubing (16), is inclined from the axis of said second tubing by more than 30°, and the connection between said rim (15) and the internal surface of said second tubing (16) is filled with adhesive.

## Patentansprüche

1. Rohrverbindungsbaugruppe, insbesondere zur Herstellung von Fahrradrahmen, die umfaßt:
- einen Stumpf (11), der an ein erstes Rohr (21) angeschweißt ist,
- ein zweites Rohr (16), das vorzugsweise aus Karbonfaser oder einem ähnlichen Material besteht und mit einem entsprechenden kreisförmigen Rand (19) endet und nach entsprechender Behandlung der jeweiligen Kontaktflächen mit Klebemitteln auf den Stumpf (11) aufgepaßt wird,
- ein weiteres Verbindungselement (13, 14), das innen sowohl in den Stumpf (11) als auch in das zweite Rohr (16) paßt,
**dadurch gekennzeichnet**, daß:
- der Stumpf (11) an seinem äußeren Ende einen Rohrabschnitt (12) mit kleinerem Durchmesser aufweist, der über einen kreisförmigen Rand (20) in den Stumpf übergeht,
- der Rohrabschnitt (12) mit kleinerem Durchmesser außen mit einem weiteren Rand (17) endet,
- das weitere Verbindungselement aus einem ersten zylindrischen Rohrabschnitt (13) und einem zweiten zylindrischen Rohrabschnitt (14) besteht, die durch einen ringförmigen Rand (18) verbunden sind und dem Stumpf (11) bzw. dem zweiten Rohr (16) zugewandt sind,
- der Außendurchmesser des ersten zylindrischen Rohrabschnitts (13) genau dem Innendurchmesser des Rohrabschnitts (12) des Stumpfes (11) mit kleinerem Durchmesser entspricht,
- der Außendurchmesser des zweiten zylindrischen Rohrabschnitts (14) sowohl mit dem Innendurchmesser des zweiten Rohrs (16) als auch dem Außendurchmesser des Rohrabschnitts (12) des Stumpfes (11) mit kleinerem Durchmesser identisch ist,
- der ringförmige Rand (18), der den ersten zylindrischen Rohrabschnitt (13) mit dem zweiten zylindrischen Rohrabschnitt (14) verbindet, genau dem weiteren Rand (17) des Rohrabschnitts (12) mit kleinerem Durchmesser entspricht, und der kreisförmige Rand (19) des zweiten Rohrs (16) genau dem kreisförmigen Rand (20) zwischen dem Außendurchmesser des Stumpfes (11) und dem entsprechenden Rohrabschnitt (12) mit kleinerem Durchmesser entspricht, und
- eine mechanische Kontakteinrichtung vorhanden ist, die verhindert, daß das zweite Rohr um den Stumpf herum rutscht, wobei die Achse (0), die der inneren zylindrischen Fläche des Rohrabschnitts (12) mit kleinem Durchmesser und dem ersten zylindrischen Rohrabschnitt (13) gemeinsam ist, mit der Achse (0') der Außenfläche des Rohrabschnitts (12) mit kleinerem Durchmesser nicht fluchtend ist.

2. Rohrverbindungsbaugruppe nach Anspruch 1, **dadurch gekennzeichnet**, daß die Ebene, die den Rand (15) einschließt und den zweiten zylindrischen Rohrabschnitt (14) in Richtung des zweiten Rohrs (16) begrenzt, gegenüber der Achse des zweiten Rohrs um mehr als 30° geneigt ist, und die Verbindung zwischen dem Rand (15) und der Innenfläche des zweiten Rohrs (16) mit Klebstoff gefüllt ist.

## Revendications

1. Assemblage de raccordement de tubes, en particulier pour fabriquer des cadres de bicyclettes, comprenant :
- un tronçon (**11**) soudé sur un premier tube (**21**),
- un deuxième tube (**16**), fait de préférence, de fibre de carbone ou d'un matériau similaire, se terminant par un bord circulaire respectif (**19**), et ajusté sur ledit tronçon (**11**) par traitement approprié des surfaces de contact liées avec des moyens adhésifs,
- un autre élément de connexion (**13**, **14**) prévu pour s'adapter intérieurement avec à la fois ledit tronçon (**11**) et ledit deuxième tube (**16**),
caractérisé en ce que :
- ledit tronçon (**11**) présente à son extrémité externe une portion de tube (**12**) de plus petit diamètre, qui se mélange avec ledit tronçon par un bord circulaire (**20**),
- ladite portion de tube (**12**) de plus petit diamètre se termine extérieurement par un autre bord (**17**),
- ledit autre élément de connexion est constitué d'une première portion de tube cylindrique (**13**) et d'une deuxième portion de tube cylindrique (**14**), reliées par un bord annulaire (**18**), et tournées respectivement vers ledit tronçon (**11**) et vers ledit deuxième tube (**16**),
- le diamètre externe de ladite première portion de tube cylindrique (**13**) s'ajuste exactement avec le diamètre interne de la portion de tube (**12**) de plus petit diamètre dudit tronçon (**11**),
- le diamètre externe de ladite deuxième portion de tube cylindrique (**14**) est identique à la fois au diamètre interne dudit deuxième tube (**16**), et au diamètre externe de ladite portion de tube (**12**) de plus petit diamètre dudit tronçon (**11**),
- ledit bord annulaire (**18**), reliant ladite première portion de tube cylindrique (**13**) à ladite deuxième portion de tube cylindrique (**14**), correspond exactement audit autre bord (**17**) de ladite portion de tube (**12**) de plus petit diamètre, et le bord circulaire (**19**) dudit deuxième tube (**16**) correspond exactement audit bord circulaire (**20**) entre le diamètre externe dudit tronçon (**11**) et la portion de tube respective (**12**) de plus petit diamètre, et
- des moyens d'interférence mécanique destinés à empêcher ledit deuxième tube de glisser autour dudit tronçon sont prévus, dans lesquels l'axe (**O**) commun à la surface cylindrique interne de ladite portion de tube de plus petit diamètre (**12**) et à la première portion de tube cylindrique (**13**), est hors d'alignement par rapport à l'axe (**O**') de la surface externe de ladite portion de tube de plus petit diamètre (**12**).

2. Assemblage de raccordement de tubes selon la revendication 1, caractérisé en ce que le plan, contenant le bord (**15**), limitant ladite deuxième portion de tube cylindrique (**14**) vers ledit deuxième tube (**16**), est incliné par rapport à l'axe dudit deuxième tube, de plus de 30°, et la connexion entre ledit bord (**15**) et la surface interne dudit deuxième tube (**16**) est remplie de colle.
